# EUROPÄISCHE PATENTSCHRIFT

(11) **EP 1 299 207 B1**
(45) Veröffentlichungstag und Bekanntmachung des Hinweises auf die Patenterteilung: **12.10.2005**
(21) Anmeldenummer: 01962551.6
(22) Anmeldetag: 12.07.2001
(51) Int. Cl.: B23B 29/034

(54) **KURZKLEMMHALTER MIT RADIALER FEINSTZUSTELLUNG**
TOOL HOLDER WITH RADIAL CUTTING DEPTH FINE ADJUSTMENT
PORTE-PLAQUETTE A REGLAGE FIN DU DEPASSEMENT RADIAL

(30) Priorität: 12.07.2000 DE 10034307
(43) Veröffentlichungstag der Anmeldung: 09.04.2003
(73) Patentinhaber: Johne + Co. Präzisionswerkzeuge GmbH, 46286 Dorsten (DE)
(72) Erfinder: JOHNE, Frank, 01558 Grossenhain-Zschauitz (DE)
(74) Vertreter: Effert, Bressel und Kollegen
(86) Internationale Anmeldenummer: PCT/DE2001/002604
(87) Internationale Veröffentlichungsnummer: WO 2002/004157

(56) Entgegenhaltungen:
- EP-A- 0 968 783
- DE-A- 19 717 835
- US-A- 3 381 553
- US-A- 4 428 704

## Beschreibung

Die Erfindung bezieht sich auf ein Rotations-Werkzeug, insbesondere einen Kurzklemmhalter mit Standardschneidplatten gemäß dem Oberbegriff von Anspruch 1.

Aus der DE-Gebrauchsmusterschrift G 85 26 482.2 ist ein Bohrkopf bekannt, bei dem die Werkzeugschneide auf einem Halter sitzt, der mittels einer sich gegen ein Widerlager abstützenden Positionierschraube radial für einen in Grenzen vorwählbaren herzustellenden Durchmesser einstellen läßt. Nach der Einstellung wird der Halter mittels einer diesen durchgreifenden Befestigungsschraube gegen eine Auflage des Halters z. B. einer Bohrstange, festgespannt.
Die genaue Einstellung dieses bekannten Halters geschieht durch einen Spezialisten mit Hilfe einer Spezialvorrichtung, wozu die Auflage bzw. ein Teil der Bohrstange abgenommen werden muß. In der Betriebsposition an der Bohrstange kann eine genaue Ein- oder Nachstellung nicht erfolgen, weil die Befestigungsschraube den Halter geringfügig versetzen könnte, da eine Relativbewegung zwischen der Auflage und dem darauf mit Reibschluß fixierten Halter möglich ist.

Aus der DE-OS 16 27 021 ist eine einstellbare Bohrstange bekannt, bei der auf einem Halter eine Schneidplatte befestigt ist, der Halter selbst mit Schrauben, die orthogonal zur Rotationsachse der Bohrstange im Basiskörper des Werkzeugschaftes angeordnet sind, fest verschraubt wird. Vor Kopf der Bohrstange ist in Parallelrichtung zum Halter und zur Achse der Bohrstange eine Schraube angeordnet, die in einem Gewinde des Basiskörpers bewegbar ist und dabei einen balligen Gleitkörper in Achsrichtung der Bohrstange bewegt. Damit wird Schneidplatte radial auswärts äuslenkt zur Erzeugung größerer Bohrdurchmesser. Diese Anordnung hat mehrere Nachteile, die Verschraubung des Halters mit zwei Schrauben ist kompliziert eine achsiale Verschiebung des Halters ist nicht möglich, um z.B. Stufenbohrungen einzubringen. Durch die zum Halter parallele Verschiebung des balligen Gleitkörpers ist der Angriffspunkt für die Auslenkung des Halters und damit der Schneidplatte variabel in Bezug auf seine Fixpunkte zum Basiskörper. Dadurch ergibt sich bei einem bestimmten Drehwinkel der Verstellschraube eine unterschiedlich radiale Auslenkung der Schneidplatte. Eine Einstellung im µm-Bereich ist nicht möglich.

Aus der DE 35 30 696 A1 bzw. EP-B 0 229 836 ist ein gattungsbildender Stand der Technik bekannt, bei dem unter Vorspannung mit Hilfe einer Parallelfeder eine Auslenkung der dort auf den federnden Halter geschraubten Schneidplatte möglich ist. Der Halter selbst ist durch Schweißen oder sonstwie mit einer kassettenartigen Basis des Halters, der Feder und seiner Verstelleinrichtung verbunden, so daß eine voreingestellte Kassette komplett in eine Bohrstange eingebaut werden kann. Die Schneidplatte kann auch im eingebauten Zustand der Kassette verstellt werden. Probleme bereitet es mit derartigen Systemen, kleine Bohrungen zu erzeugen, da die Kassette an sich schon Abmessungen hat, die nicht für kleine Bohrungen geeignet ist. Des weiteren ist auch durch die Verstellschraube zunächst ein Keilkörper zu bewegen, der seinerseits dann den Halter verstellt. Durch diese Anordnung ergibt sich zwangläufig ein zusätzliches Spiel; der stick-slip-Effekt ist zwar auf ein Minimum reduziert, jedoch lassen sich so allenfalls Radialverstellungen im Bereich von 10 ,um oder größer erreichen.

Dasselbe gilt für die kassettenartige Anordnung gemäß der DE 22 35 782 C2, bei der eine Kassette unter Federverspannung mit Hilfe entsprechender Keilflächen und Druckschrauben so verstellt werden kann, daß der Bohrdurchmesser geringfügig größer oder kleiner gestaltet wird. Auch in diesem Fall hindert die Patronenform daran, kleinere Bohrungen zu erzeugen. Außerdem wirken die Federn nicht primär gegen die Verstelleinrichtung, so daß eine Verstellung allenfalls mit einer Genauigkeit im Bereich von einigen zehntel mm möglich ist. Der Wirkbereich von Feinbohrelementen liegt bei einer Verstell-Genauigkeit von kleiner 10 µm.

Aus der DE 39 26 026 A1 sind Feinbohrköpfe bekannt, bei denen ein für kleine Bohrungen geeigneter schaftartiger Schneidplattenträger gegen Federwirkung radial verstellbar ist. Derartige Feinbohrköpfe oder Feinbohrpatronen sind jedoch teuer. Mit diesen Feinbohrköpfen kann man nicht in einem Durchgang mehrstufige Bohrungen herstellen, was in der Regel durch Kurzklemmhalter möglich ist.

Letztlich ist aus der DE 198 27 778 A1 bzw. EP-A 0 968 783 ein gattungsgemäßer Kurzklemmhalter mit Standardschneidplatte bekannt, der in seinem vorderen Teil wenigstens eine Aufnahme für eine Schneidplatte und im Bereich zwischen seinen Enden ein Loch zum Durchtritt einer Befestigungsschraube aufweist, mit der er auf einem Träger, insbesondere einer Bohrstange festlegbar ist, wobei der Halter an seinem die Schneidplatte tragenden Teil mittels einer Verstellvorrichtung relativ zu einer Abstützung elastisch auslenkbar ist, der Halter mit einer Durchbrechung versehen ist und eine Parallel-Biegefeder-Anordnung bildet, so daß die Schneidplatte während ihrer Verstellung im wesentlichen eine Parallelverschiebung in bezug auf die Schneidkante erfährt, wobei die Verstellvorrichtung als Stellschraube ausgebildet ist, die an einem gewindelosen Umfangsteil eine Druckzone aufweist, die gemeinsam mit einer komplementären Zone am Halter ein Keilflächenpaar bildet.
Dabei wird die Stellschraube orthogonal zur Werkzeugachse geschraubt zur direkten Auslenkung der Schneidplatte. Die Stellschraube kann mit einer Skalierung für die Zustellung versehen sein.
Zwar ist die Vorrichtung hervorragend für eine Feinverstellung von radial etwa 3 µm geeignet, jedoch hat die Praxis gezeigt, daß das Werkzeug kostengünstig und stabil nicht für Bohrungen mit Durchmesser unter 20 mm herstellbar ist, da die Parallelfeder und die Halteranordnung mehr Platz benötigen Von daher liegt der Erfindung das Problem zugrunde, für Bohrdurchmesser unter 20 mm ein Werkzeug nach Art eines Kurzklemmhalters zu schaffen, das die Vorteile des Standes der Technik nutzt, insbesondere eine leichte radiale Verstellung der Schneidplatte im Genauigkeitsbereich von wenigen µm gestattet, sich aber zugleich kostengünstig fertigen läßt und stabil gestaltet ist. Das Werkzeug soll ferner einfach ausgebildet sein und sich insbesondere auch verhältnismäßig klein bauen lassen, so daß es selbst unter beengten Platzverhältnissen eingesetzt werden kann, namentlich als Feinbohrelement. Mit alledem zusammenhängende weitere Probleme, mit denen sich die Erfindung befaßt, ergeben sich aus der jeweiligen Erläuterung der aufgezeigten Lösung.

Die Lösung der Erfindung ergibt sich aus den in Anspruch 1 angegebenen Merkmalen. Weiterbildungen der Erfindung sind in den Unteransprüchen erfaßt.

Die Lösung umfaßt ein solches Werkzeug als eine kleinbauende Einheit. Seine Abmessungen lassen sich so wählen, daß es auch für geringe Bohrlochdurchmesser geeignet ist. Dabei ist ohne weiteres auch eine axiale Einstellbarkeit zu verwirklichen, wie sie vielfach notwendig ist, um z.B. stufenförmige Bohrungen zu erzeugen. Bei alle dem zeichnet sich das Werkzeug aber durch eine besonders vorteilhafte Einstellbarkeit in radialer Richtung aus, ohne daß dabei nicht erwünschte Beeinflussungen anderer Größe, insbesondere des Einstellwinkels, eintreten. Dies ist in einer Ausführungsform durch die Ausbildung des Halters Feder-System erreicht. Darunter ist eine Ausgestaltung zu verstehen, bei der unter Anwendung einer elastischen Biegung von Partien des Halters dessen Kopfteil, d.h. der die Schneidplatte tragende Teil eine Verschiebung gegenüber seinem abgewandten Ende erfährt.

Die Ausbildung läßt sich so treffen, daß der Halter im ausgelenkten Zustand im wesentlichen unbelastet ist und eine elastische Rückstellkraft, die einer Auslenkung entgegenwirkt, erst entsteht, wenn die Verstellvorrichtung aus einer Null- oder Ausgangsposition heraus betätigt wird. Mit besonderem Vorteil wird aber der Halter bereits im geringfügig ausgelenkten Zustand schon unter Vorspannung gesetzt, so daß von vornherein eine Spielfreiheit gewährleistet ist. Dies läßt sich dadurch erreichen, daß der integral eine Feder enthaltende Halter fest mit am Basiskörper fixiert wird und dabei unmittelbar an der Stellschraube anliegt.

Für die zu dieser Feder-Ausbildung vorgesehene Ausnehmung bestehen verschiedene Ausführungsmöglichkeiten, namentlich solche mit schlitzartiger Ausnehmung und Rundungen am Schlitzende, die Kerbspannungen verhindern.

Die Verstellvorrichtung für die Werkzeugschneide ist, wie für sich bekannt, als Schraube ausgebildet, die in ein Gewinde des Basiskörpers oder eine dort festgesetzte Mutter eingreift und sich am Basiskörper abstützt. Dabei bildet die Stellschraube mit dem Halter eine Keilflächenpaarung. Dadurch können beim Drehen der Schraube in Löserichtung infolge der hohen Vorspannung die Keilflächen gleiten, d.h. der Halter bleibt stets in Anlage an der Schraube.
Die Keilflächenpaarung zwischen Halter und Verstellschraube kann beispielsweise durch einen balligen oder konischen Abschnitt der Schraube, gepaart mit vertikalem Abschnitt des Halters aber auch umgekehrt oder durch Mischformen erzeugt werden. Wichtig ist der direkte Kontakt der Elemente und deren Wirkrichtung zueinander. Bei dieser Verstellvorrichtung ist es möglich, die Schneidplatte radial feiner als 2 µm auszulenken und entsprechend genaue Bohrungen zu erzeugen. Die Wiederholgenauigkeit ist so exakt, daß die Bewegung der Verstellschraube an einer daran angeordneten ringförmigen Skalierung relativ zu einem Bezugspunkt am Basiskörper einer entsprechenden Radialverstellung der Schneide zugeordnet werden kann. Ein Bogenmaß von 1mm an der Schraube entspricht z.B. 1/1000 mm an der Schneide. Diese Wiederholgenauigkeit ist Voraussetzung, um mit preiswerten Werkzeugen, wie einem Standard-Kurzklemmhalter, die von DIN/ISO 9000 ff geforderten Qualitätsbedingungen einzuhalten. Hier liegt die Forderung bei einer Einstellgenauigkeit von 10 µm oder feiner. Der kleinste realisierbare Bohrdurchmesser liegt mit der Lösung 1 bei etwa 15 mm.

Eine zweite Variante der Lösung läßt eine Zustellung von 5 µm oder feiner zu. Hier ist anstelle einer geschlitzten Feder als Teil des Halters eine integrale Feder als sehr steife Feder, vorzugsweise eine von einer Spannzange als Ringfeder im Prinzip bekannten mäanderförmigen oder zick-zack-förmigen Feder, am Träger ausgebildet.

Die Verstelleinrichtung ist wie bei der ersten Lösung gestaltet und sie verstellt den Halter durch radiale Auslenkung der Schneidspitze gegen die Wirkung der Feder. Dazu ist die Achse der Verstellschraube in - vorzugsweise - Orthogonalrichtung zur Rotationsachse des Werkzeuges und der Werkzeugschneide angeordnet, kann jedoch dazu geschwenkt sein, wenn dies aus konstruktiven Gründen erforderlich ist, aber die Art der Keilflächenpaarung bleibt. Die Stellschraube bildet hier zugleich eine Befestigungseinrichtung, welche um weitere reibschlüssige und formschlüssige Elemente ergänzt ist.

Die Verstellschraube sollte möglichst nahe hinter der Schneidkante angeordnet, um die Verstellkraft ohne große Momente direkt am Halter in Höhe der Schneidplatte ausüben zu können, was aber aus Platzgründen nicht möglich ist, wenn der Werkzeughalbdurchmesser bis zu 4 mm klein werden soll.

Mit der Lösung ist einer Forderung des Marktes Rechnung getragen, preiswerte Werkzeuge für kleine Bohrungen und für eine Massenfertigung bei hoher Funktionsgenauigkeit und Produktionssicherheit bereitzustellen.

Weitere Einzelheiten und Vorteile der Erfindung ergeben sich aus der nachstehenden Erläuterung von Ausführungsbeispielen und der zugehörigen schematischen Zeichnung. Es zeigen:
- Figur 1: einen Kurzklemmhalter mit schematischer Darstellung einer erfindungsgemäßen Anordnung Schneide abseits des Halterendes;
- Figur 2: eine zweite Form der Erfindung in Seitenansicht
- Figur 3: einen Schnitt gemäß Figur 2 durch die erfindungsgemäße Werkzeuganordnung;
- Figur 4: eine dritte Form der Erfindung;
- Figur 5: einen Schnitt durch die dritte Form gemäß Figur 4;
- Figur 6, 6a: einen nicht zur Erfindung gehörenden Halter mit Federschraube als Rückholfeder.

Gleiche oder gleichwirkende Teile sind im Folgenden mit den selben Bezugszeichen versehen.

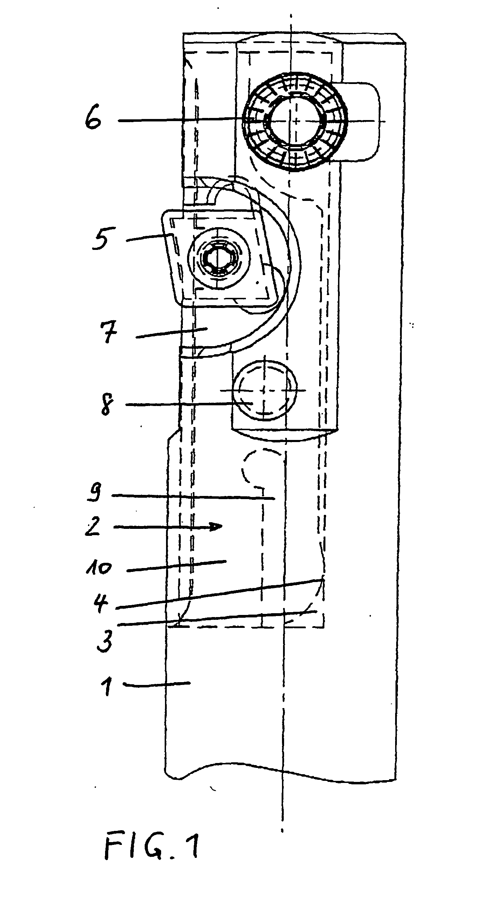

Figur 1 zeigt einen Kurzklemmhalter mit Träger 1 und Halter 2, eine Nut 3 im Träger für den Halter, der sich mit Schulter 4 am Träger abstützt.
Die Werkzeugschneide 5 sitzt auf Halter 2; an dieser Stelle hat der Träger 1 bzw. die Nut 3 eine Öffnung 7 für die Zerspanungsarbeit der Werkzeugschneide.
Die Werkzeugschneide sitzt hier zwischen Befestigung mit Stift 8 und Stellschraube 6, nicht am Trägerende, damit der Träger eine hinreichende Stabilität auch bei kleinem Durchmesser behält.

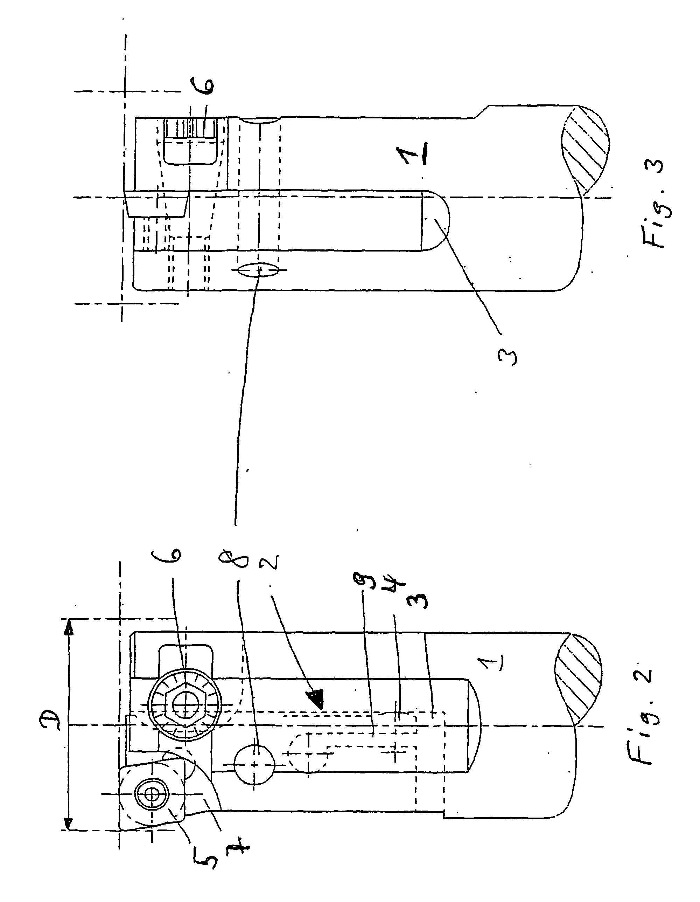

Fig.2 und 3 zeigen in um 90° versetzten Ansichten eine weitere Form der Erfindung für Bohrungen von min etwa 14 mm Durchmesser D. Die Schneide 5 sitzt am Trägerende; die übrige Anordnung entspricht etwa Fig. 1

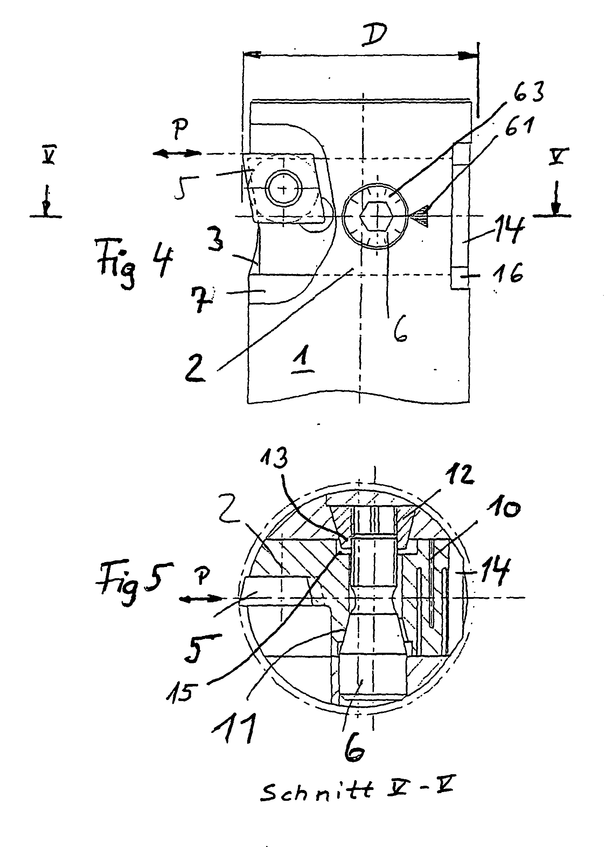

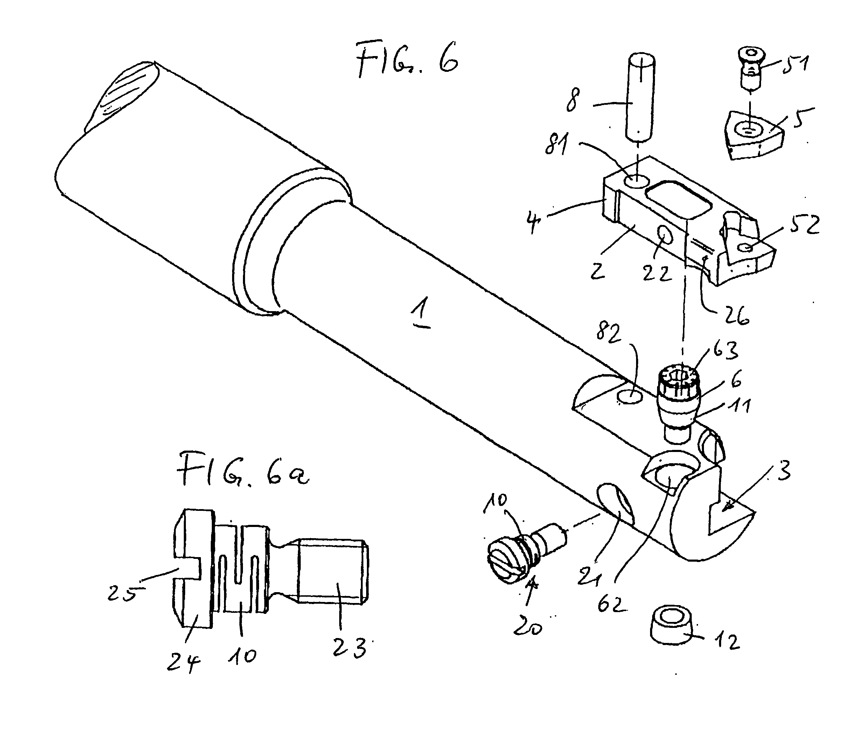

Die Träger 1 gemäß den Fig. 1 - 3 und auch 6 umschließen an mindestens 3 Seiten den Halter 2, der damit ein sehr stabiles und - gegenüber dem Stand der Technik - noch weniger flatterndes Werkzeug für sehr eng tolerierte Bohrungen darstellt . Bei größeren Trägern, kann der Halter auch vom Kopf her in eine ganz umschlossene Nut eingebracht werden, wenn er seitlich Öffnungen für die Schneide, die Befestigung und die Stellschraube aufweist.
In allen Fällen ist die Stellschraube 6 mit einer Einstellhilfe 63(Fig.6), z.B. Strichcode versehen, der relativ zu einer Markierung 61 (Fig. 4) am Halter oder Träger ablesbar ist.

Fig. 4 und 5 (Schnitt V -V durch Fig.4) zeigen einen Quereinbau des Halters 2, wobei das der Schneide 5 gegenüber liegende Halterende als mäanderförmige Feder 10 ausgebildet ist. Die Stellschraube 6 mit Keilfläche 11 zur Verstellung der Schneide 5 in Pfeilrichtung P hat an der Mutter 12 eine Nase 13 als in die Ausnehmung 15 des Halters 2 ragenden Widerhaken zum Formschluß mit Träger 1 und Halter 2 in einer Kraftrichtung. Der Halter wird durch weitere nicht dargestellte Elemente, insbesondere mittels zwischen Träger und Halter eingesetzten Federn, dort spielfrei und zugleich formschlüssig in einer weiteren Kraftrichtung im Träger gehalten. Ebenso ist der Kopf 14 mit Anschlägen 15 versehen als Einschubtiefenbegrenzung und Drehmomentstütze. Der Halter 2 wird jeweils exakt für einen kleinen Durchmesserbereich des Trägers 1 und des zu erzeugenden Bohrdurchmessers D angepaßt.
Diese sehr stabile und preiswerte Bauweise ist insbesondere für Trägerdurchmesser größer 10mm und Zustellschritte größer 2µm geeignet.

Fig. 6 zeigt in perspektivischer Explosivdarstellung eine nicht zur Erfindung gehörende Bauform mit einer Federschraube, gemäß Fig. 6a vergrößert dargestellt. Eine Bohrstange dient als Träger 1 für den Halter 2, der in eine dreiseitig vom Träger umschlossene Nut 3 einsetzbar ist. Der Halter 2 wird in der Nut mittels Paßstift 8 mit Spiel in Bohrungen 82 des Trägers gehalten, aber zugleich durchdringt der Paßstift den Halter 2 mit Preßpassung in Bohrung 81. Der Halter kann um die Achse des Stiftes 8 schwenken, wobei er mit Schulter 4 in bestimmten Positionen zur Anlage im Rücken der Nut 3 gelangt. Weiterhin wird der Halter 2 in einer Querrichtung zu Stift 8 mittels einer Federschraube 20 gehalten, die in Loch 21 den Träger durchdringt und mit Gewindezapfen 23 in Gewindeloch 22 eingreift, bis der Kopf 24 am Träger anliegt. Bei weiterem Einschrauben mittels Werkzeug, das in Nut 25 angesetzt wird, tritt die Feder 10 am Kopf der Schraube in Funktion und erteilt dem Halter 2 eine Vorspannung.
Eine Schneidplatte 5 kann mit Schraube 51 im Gewindeloch 52 des Halters fixiert werden. Die Lage der Schneidplatte zur Erzeugung eines vorbestimmten Durchmessers kann in Grenzen genau mit der Federschraube 20 spielfrei fixiert werden. Die Feinverstellung auf den exakten Durchmesser D (Fig. 2 und 4) erfolgt mit der Stellschraube 6. Diese wird in den Träger 1 durch Loch 62 eingesetzt und in einer für sich bekannten konischen Mutter 12 an der anderen Trägerseite gehalten. Mit ihrer konischen Fläche 11 wirkt sie auf eine komplementär ausgebildete Fläche 26 am Halter und verstellt so die Schneidplatte 5 auf den gewünschten Durchmesser D, gegen die Feder 10 der Federschraube 20.
Die Flächenpaarung (Bezugsziffern11 / 26) zwischen Stellschraube und Halter bildet in allen Ausführungsformen der Erfindung ein Keilflächenpaar mit vorbestimmbarem Keilwinkel, wobei die komplementär gestalteten Flächen einerseits ballig, konisch, zylindrisch oder kugelig und andererseits ebenflächig oder in - nicht so günstiger Anordnung - auch von gleicher Gestalt sein können.

## Patentansprüche

1. Rotations-Werkzeug für die spanabhebende Bearbeitung, mit einem einstückigen Halter, der an einem Teil eine Werkzeugschneide, insbesondere eine lösbar befestigte Schneidplatte, trägt und im Bereich zwischen den beiden Enden des Halters ein Loch zum Durchtritt einer Befestigungseinrichtung aufweist, mit der er auf einem Träger, insbesondere einer Bohrstange festlegbar ist, wobei der Halter mittels einer mit dem Halter ein Keilflächenpaar bildenden Verstellvorrichtung (6) relativ zu einer Abstützung elastisch auslenkbar ist, der Halter mit Ausnehmungen versehen ist und dadurch eine Feder-Anordnung bildet, so dass die Werkzeugschneide eine stick-slip-freie radiale Verschiebung erfährt, **dadurch gekennzeichnet, dass** der Halter (2) mit Ausnahme des Bereiches der Werkzeugschneide (5) in einer Aussparung (3) des Trägers (1), die den Halter (2) an *mindestens* drei Seiten umschließt, angeordnet ist, *die Befestigungseinrichtung ein den Halter* (2) *durchdringender Stift (8) ist* und der Halter sich mit seiner der Werkzeugschneide abgewandten *Seite (4) mit einer Schulter am Rücken der Aussparung (3)* gegen den Träger (1) abstützt.

2. Werkzeug nach Anspruch 1, **dadurch gekennzeichnet, dass** die *Aussparung im Wesentlichen* als Schlitz oder Nut (3) geformt ist.

3. Werkzeug nach Anspruch 1, **dadurch gekennzeichnet, dass** der Halter an vier Seiten vom Träger (1) umschlossen ist und die Verstellvorrichtung (6) als Befestigungseinrichtung *für den Halter* (2) ausgebildet ist.

4. Werkzeug nach einem der vorhergehenden Ansprüche, **dadurch gekennzeichnet, dass** die Verstellvorrichtung (6) als Stellschraube ausgebildet ist, die an einem gewindelosen Umfangsteil (11) eine Druckzone aufweist, die gemeinsam mit einer komplementären Zone am Halter (2) ein Keilflächenpaar bildet.

5. Werkzeug nach einem der vorhergehenden Ansprüche, **dadurch gekennzeichnet, dass** am Kopf der Stellschraube (6) eine ringförmige Skalierung (63) und am Träger (1) eine Bezugsmarke (61) für die Skalierung vorgesehen ist.

## Claims

1. Rotational tool for metal cutting, having a one-piece holder which carries a tool tip on one part, in particular a detachably mounted cutting tip, and has, in the region between the two ends of the holder, a hole for penetration of a mounting device, with which said holder can be mounted on a carrier, in particular a boring rod, the holder being elastically deflectable relative to a support by means of an adjustment device (6) which forms a pair of key faces with the holder, the holder being provided with recesses and as a result forming a key arrangement, so that the tool tip is subjected to a stick-slip-free radial displacement, **characterised in that** the holder (2), with the exception of the region of the tool tip (5), is disposed in a recess (3) of the carrier (1), which encloses the holder (2) on at least three sides, the mounting device is a pin (8) which penetrates the holder (2) and the holder is supported against the carrier (1) by its side (4) which is orientated away from the tool tip with a shoulder on the back of the recess (3).

2. Tool according to claim 1, **characterised in that** the recess is formed substantially as a slot or a groove (3).

3. Tool according to claim 1, **characterised in that** the holder is enclosed on four sides by the carrier (1) and the adjustment device (6) is configured as a mounting device for the holder (2).

4. Tool according to one of the preceding claims, **characterised in that** the adjustment device (6) is configured as an adjusting screw which has, on a threadless circumferential part (11), a pressure zone which, together with a complementary zone on the holder (2), forms a pair of key faces.

5. Tool according to one of the preceding claims, **characterised in that**, on the head of the adjusting screw (6), an annular scale (63) is provided and, on the carrier (1), a reference mark (61) for the scale.

## Revendications

1. Outil rotatif pour l'usinage par enlèvement de copeaux, comprenant un porte-outil en une seule pièce, qui supporte sur une partie un tranchant d'outil, notamment une matrice de découpage fixée de manière amovible, et comprend dans la zone située entre les deux extrémités du porte-outil un trou destiné à faire passer un système de fixation, avec lequel ledit porte-outil peut être fixé sur un support, notamment une barre d'alésage, le porte-outil pouvant être dévié de façon élastique par rapport à un appui au moyen d'un dispositif de réglage (6) formant avec le porte-outil une paire de surfaces cunéiformes, le porte-outil étant pourvu d'évidements et formant de ce fait un agencement élastique, de sorte que le tranchant d'outil subit un déplacement radial non saccadé, **caractérisé en ce que** le porte-outil (2) est disposé, à l'exception de la zone du tranchant d'outil (5), dans un évidement (3) du support (1), lequel évidement entoure le porte-outil (2) sur au moins trois côtés, le système de fixation est un goujon (8) traversant le porte-outil (2) et le porte-outil s'appuie avec son côté (4) opposé au tranchant d'outil, avec un épaulement à l'arrière de l'évidement (3), contre le support (1).

2. Outil selon la revendication 1, **caractérisé en ce que** l'évidement est formé sensiblement comme une fente ou une rainure (3).

3. Outil selon la revendication 1, **caractérisé en ce que** le porte-outil est entouré sur quatre côtés par le support (1) et le dispositif de réglage (6) est conçu comme un dispositif de fixation pour le porte-outil (2).

4. Outil selon l'une quelconque des revendications précédentes, **caractérisé en ce que** le dispositif de réglage (6) est conçu comme une vis de réglage, qui comprend sur une partie périphérique sans filet (11) une zone comprimée, qui forme conjointement avec une zone complémentaire sur le porte-outil (2) une paire de surfaces cunéiformes.

5. Outil selon l'une quelconque des revendications précédentes, **caractérisé en ce qu'**une échelle annulaire (63) est prévue sur la tête de la vis de réglage (6) et sur le support (1), une marque de référence (61) pour l'échelle.
